(19) Europäisches Patentamt
European Patent Office
Office européen des brevets

(11) Publication number: **0 549 643 B1**

# (12) EUROPEAN PATENT SPECIFICATION

(45) Date of publication of patent specification: **07.09.94**

(51) Int. Cl.[5]: **C09D 133/08**, C09D 133/10

(21) Application number: **91916371.7**

(22) Date of filing: **17.09.91**

(86) International application number:
**PCT/US91/06589**

(87) International publication number:
**WO 92/05225 (02.04.92 92/08)**

## (54) AUTOMOTIVE CLEAR COATING COMPOSITION OF AN ACRYLOSILANE, ACRYLIC POLYOL AND CROSSLINKING AGENT.

(30) Priority: **17.09.90 US 582655**

(43) Date of publication of application:
**07.07.93 Bulletin 93/27**

(45) Publication of the grant of the patent:
**07.09.94 Bulletin 94/36**

(84) Designated Contracting States:
**AT BE CH DE ES FR GB IT LI NL SE**

(56) References cited:

**Derwent's abstract, No. 77-73 476/41, JP 520 104 542, publ.week 7741 (KUBOKO PAINT KK ET AL.)**

**Derwent's abstract, No. 76-21 725/12, JP 510 014 934, publ. week 7612 (SAIDEN CHEMICAL IND CO)**

**PATENT ABSTRACTS OF JAPAN, vol. 3, no. 68, C 48, abstract of JP 54-43243, publ 1979-05-04 (KANSAI PAINT K.K.)**

(73) Proprietor: **E.I. DU PONT DE NEMOURS AND COMPANY**
**1007 Market Street**
**Wilmington Delaware 19898 (US)**

(72) Inventor: **HAZAN, Isidor**
**Apt. 579 Millbridge**
**Clementon, NJ 08021 (US)**
Inventor: **RUMMEL, Mitzie Kristine**
**4 Winterberry Court**
**Mt. Laurel, NJ 08054 (US)**

(74) Representative: **Abitz, Walter, Dr.-Ing. et al**
**Patentanwälte Abitz & Partner**
**Postfach 86 01 09**
**D-81628 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 549 643 B1

## Description

### BACKGROUND OF THE INVENTION

This invention is directed to a coating composition useful for finishing automobiles and trucks. In particular, the invention is directed to an acrylosilane coating composition that can be used as a clearcoat over a pigmented basecoat to provide a clearcoat/color coat finish on a substrate, such as on the exterior of an automobile or truck body.

It is well known that consumers prefer or are attracted to automobiles and trucks where the exterior finish has a high gloss and excellent DOI (distinctness of image). However, it is also known that the exterior finish of automobiles and trucks deteriorates over time and loses it aesthetic appearance in terms of luster and glossiness. The principal causes of the deterioration of the finish are exposure of the finish to sunlight and etching of the finish caused by environmental chemical attack of the finish of the automobile or truck. The latter is a more recently observed problem caused by exposure to the environment during normal use.

In order to protect and preserve the aesthetic qualities of the finish on a vehicle, a clear unpigmented topcoat is provided over a pigmented layer of finish or color coat so that the color coat remains unaffected even on prolonged exposure to weathering. Alkoxy silane polymers have been disclosed for use in making the clear topcoat as shown in U.S. Patents 4,499,150 and 4,499,151, both issued to Dowbenko et al on February 12, 1985. A number of other patents in which silane polymers are used in coating compositions have been issued. However, none of these compositions have been placed into commercial use as automotive and truck finishes that not only require a high level of appearance but also require long term durability and weatherability. In particular, the long term durability and crack resistance required of the clear coat of a clearcoat/colorcoat finish, i.e., a finish having a topcoat clear that is applied over a colored or pigmented layer which is adhered to a substrate, that are currently being used for the exterior of automobiles and trucks is not met by these prior art compositions.

There is a need for a clearcoat finish that can be applied over a variety of colorcoats, such as water or solvent based color coats or powder color coats to provide a durable, weatherable clearcoating that has excellent adhesion to the colorcoat, does not crack, remains clear and retains a high gloss and DOI on weathering and in particular is resistant to etching caused by environmental chemical attack, e.g.,caused by acid rain.

### SUMMARY OF THE INVENTION

A coating composition useful for finishing the exterior of automobiles and trucks which contains about 20-70% by weight, based on the weight of the coating composition, of binder and a liquid organic carrier for the binder; wherein the binder contains

a. an acrylosilane polymer having a weight average molecular weight of about 500-30,000;

b. an acrylic polyol polymer having a hydroxyl number of about 50-200 and a weight average molecular weight of about 1,000-200,000 and

c. an alkylated melamine formaldehyde crosslinking agent.

A coated substrate having a conventional pigmented basecoat or colorcoat and a clear layer of the above composition adhered thereto and a process for coating a substrate with a pigmented basecoat and with the clear coat of the above coating composition also are part of this invention.

### BRIEF DESCRIPTION OF THE DRAWING

The figure shows a cross-sectional view of an automotive substrate with various coatings thereon including a clear coating of the composition of this invention.

### DETAILED DESCRIPTION OF THE INVENTION

This invention provides a coating composition useful for finishing the exterior of automobile and truck bodies which does not have the drawbacks associated with conventional coating compositions, is durable, has excellent adhesion to basecoats or color coats, does not crack, does not deteriorate in terms of transparency under prolonged exposure to weather conditions, and imparts a superior glossy appearance for an extended period. Also, the coating composition which, when used as a clearcoat over a basecoat which may be a conventional pigmented finish, forms a clear glossy finish that is resistant to etching caused by environmental chemical attack.

The coating composition can be used over a suitable basecoat in a "wet-on-wet" application i.e., a clear coating of the composition is applied to a basecoat without curing or completely drying the basecoat. Adverse side effects do not occur, such as sagging, mottling or "strike in", i.e., where the clear coat penetrates the basecoat to cause a degradation of the appearance of the resulting finish.

Another advantage of the coating composition is that it can be formulated as a one-package system that has an extended shelf life.

In the process for applying a basecoat/clear coat to a substrate, the basecoating composition which contains a film forming polymer and pigment, is applied and then the clear coating composition of this invention is applied to form a clear coat over the basecoating composition, preferably, before a substantial drying or curing of the basecoating composition occurs. The coated substrate is then heated for a predetermined time period so as to allow curing of the base and clear coats.

Upon curing, at least a portion of the silane containing polymer migrates and stratifies to the top of the clearcoat so as to produce a durable, weather-resistant clearcoat which gives the coated substrate excellent gloss and DOI. ESCA analysis (electron scanning chemical analysis) of a cross section of the cured layer of clear coat showed this stratification.

As shown in Figure 1, a typical automobile steel panel or substrate 1 is coated with inorganic rustproof zinc or iron phosphate layer 2 over which is provided a primer 3 which can be an electrocoated primer or a repair primer. Typically, electrocoating primers comprise an epoxy polyester and various epoxy resins and repair primers of an alkyd resin. Optionally, a primer surfacer 4 can be applied over the primer coating 2 to provide for better appearance and/or improved adhesion of the basecoating 5 to the primer coating 3. A pigmented basecoating or colorcoat 5 is applied over layer 4 and clearcoat 6 of the composition of this invention is then applied to the colorcoat 5. The colorcoat 5 and clearcoat 6 are preferably deposited to have thicknesses of about 0.1-2.5 mils and 1.0-3.0 mils, respectively.

The coating composition contains about 20-70% by weight of the binder and about 30-80% by weight of an organic solvent carrier.

The binder of the coating composition contains about 10-90% by weight acrylosilane containing polymer, about 5-40% by weight of the acrylic polyol polymer and 5-50% by weight of the cross-linking agent, based on the weight of the composition.

The acrylosilane polymer has a weight average molecular weight of about 1,000-30,000, a number average molecular weight of about 500-6,000.

All molecular weights disclosed herein are determined by gel permeation chromatography using polystyrene as a standard.

The acrylosilane polymer includes polymerized monomers of about 40-95% by weight ethylenically unsaturated non-silane containing monomers and about 5-60% by weight ethylenically unsaturated alkoxy or acyloxy silane monomers, based on the weight of the acrylosilane. Useful ethylenically unsaturated non-silane containing monomers are alkyl acrylates, alkyl methacrylates and any mixtures thereof, where the alkyl groups have 1-12 carbon atoms.

Typical alkyl methacrylates and acrylates used to form the acrylosilane polymer are methyl methacrylate, ethyl methacrylate, propyl methacrylate, butyl methacrylate, isobutyl methacrylate, pentyl methacrylate, hexyl methacrylate, octyl methacrylate, nonyl methacrylate, lauryl methacrylate and the like, methyl acrylate, ethyl acrylate, propyl acrylate, butyl acrylate, isobutyl acrylate, pentyl acrylate, hexyl acrylate, octyl acrylate, nonyl acrylate, lauryl acrylate and the like.

Cycloaliphatic methacrylates and acrylates also can be used such as trimethylcyclohlexyl methacrylate, trimethylcyclohexl acrylate, iso-butyl methacrylate, t-butyl cyclohexyl acrylate, t-butyl cyclohexyl methacrylate and any mixtures thereof.

Aryl acrylate and aryl methacrylates also can be used such as benzyl acrylate and benzyl methacrylate.

Up to about 50% by weight of other polymerizable monomers can be used in the acrylosilane polymer such as styrene, methyl styrene, acrylamide, acrylonitrile, methacrylonitrile, and the like. Styrene can be used in the range of 5-50% by weight.

Typically useful alkoxysilane monomers used to prepare the acrylosilane polymer have the following structural formula:

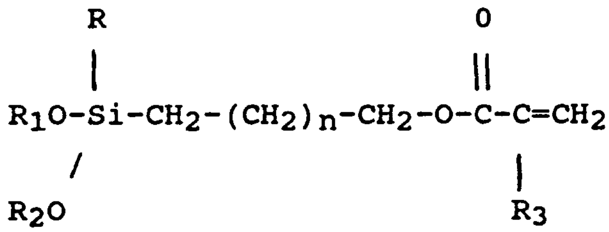

wherein R is either $CH_3$, $CH_3CH_2$, $CH_3O$, or $CH_3CH_2O$; $R_1$ and $R_2$ are $CH_3$ or $CH_3CH_2$; and $R_3$ is either H, $CH_3$, or $CH_3CH_2$ and n is 0 or a positive integer of not greater than 8. In one preferred alkoxysilane R is $CH_3O$ or $CH_3CH_2O$

Other typically useful alkoxy silane have the following structural formula:

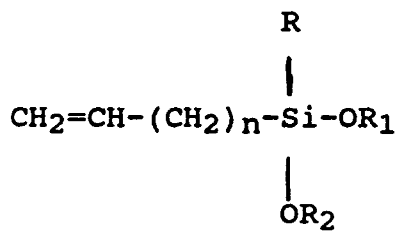

wherein R, $R_1$ and $R_2$ are described above and n is a positive integer of 1-10.

Typical examples of useful alkoxysilanes are the acrylatoalkoxy silanes, such as gamma-acryloxypropyltrimethoxy silane and the methacrylatoalkoxy silanes, such as gamma-methacryloxypropyltrimethoxy silane, gamma-methacryloxypropyltrimethoxy silane and gamma-methacryloxypropyltris (2-methoxyethoxy) silane. Preferred alkoxysilanes are gamma trimethoxysilylpropyl methacrylate and gamma trimethoxysilylpropyl acrylate.

Other alkoxysilanes are the vinylalkoxy silanes, such as vinyltrimethoxy silane, vinyltriethoxy silane and vinyltris(2-methoxyethoxy) silane.

Acyloxysilanes also can be used and include acrylatoxy silane methacrylatoxy silane and vinyl-acetoxy silanes, such as vinylmethyldiacetoxy silane, acrylatopropyltriacetoxy silane, and methacrylatopropyltriacetoxy silane, and mixtures thereof.

An example of an acrylosilane polymer useful in the coating composition of this invention contains the following constituents: about 15-25% by weight styrene, about 25-50% by weight trimethylcyclohexyl methacrylate or isobutyl methacrylate and about 30-60% by weight methacryloxypropyl trimethoxysilane.

A preferred acrylosilane polymer contains about 52% by weight methacryloxypropyltrimethoxy silane, about 30% by weight styrene, about 18% by weight of nonfunctional acrylates or methacrylates such as trimethylcyclohexyl methacrylate, butyl acrylate, and iso-butyl methacrylate and any mixtures thereof.

Silane functional macromonomers also can be used. These macromonomers are the reaction product of alkoxysilane compound having a reactive group such as epoxide or isocyanate with an ethylenically unsaturated non-silane containing monomer having a reactive group that is co-reactive with the silane monomer. The reactive groups are the same as those on the silane monomer but are chosen to be reactive with the groups on the silane monomer and typically are hydroxyl or epoxide groups. One useful macromonomer is the reaction product of a hydroxy functional ethylenically unsaturated monomer such as a hydroxy alkyl acrylate or methacrylate having 1-4 carbon atoms in the alkyl group and an isocyanato alkyl alkoxysilane such as isocyanato propyl triethoxysilane.

Typically useful macromonomers have the following structural formula:

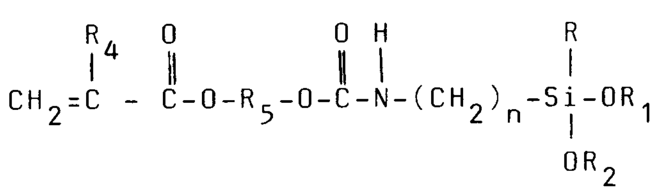

wherein R, $R_1$ and $R_2$ are described above and $R_4$ is H or $CH_3$, $R_5$ is an alkylene group having 1-8 carbon atoms and n is a positive integer from 1-8.

The acrylic polyol polymer is an acrylic solution polymer of polymerized monomers of any of the aforementioned alkyl acrylates and/or methacrylates and hydroxy alkyl acrylates or methacrylates. The polymer preferably has a hydroxyl number of about 50-200 and a weight average molecular weight of about 1,000-200,000 and preferably about 1,000-20,000.

Typically useful hydroxy alkyl acrylates and methacrylates are hydroxy ethyl acrylate, hydroxy propyl acrylate, hydroxy isopropyl acrylate, hydroxy butyl acrylate, hydroxy ethyl methacrylate, hydroxy propyl methacrylate, hydroxy isopropyl methacrylate, hydroxy butyl methacrylate, and the like, and mixtures thereof.

Up to about 50% by weight of other polymerizable monomers can be used in the acrylic polyol polymer. Any of the aforementioned monomers can be used, such as styrene, methylstyrene, acrylamide, acrylonitrile, methacrylonitrile, methacrylamide, methylol methacrylamide and methylol acrylamide and the like, and mixtures thereof.

One useful acrylic polyol polymer contains about 10-20% by weight of styrene, 40-60% by weight of alkyl methacrylate or acrylate having 1-6 carbon atoms in the alkyl group, and 10-50% by weight of hydroxy alkyl acrylate or methacrylate having 1-4 carbon atoms in the alkyl group. One such polymer contains about 15% by weight styrene, about 29% by weight iso-butyl methacrylate, about 20% by weight 2-ethylhexyl acrylate, and about 36% by weight hydroxy propylacrylate.

The composition of the present invention may also contain, in addition to the above components, a non-aqueous dispersion polymer (NAD) having a core and arms with hydroxy functionality attached to the core. Preferably, the core has arms attached thereto of macromonomers having hydroxyl functional groups. The level of the NAD polymer can vary from about 5-70% by weight of the total binder composition, preferably, about 10-30% by weight of the NAD polymer is used.

The NAD polymer contains about 10-90% by weight, based on the weight of the NAD polymer, of a core of crosslinked polymerized ethylenically unsaturated monomers having a weight average molecular weight of about 50,000-500,000 and 90-10% by weight of arms attached to the core of macromonomers having a weight average molecular weight of about 1,000-30,000. The macromonomers contain about 5-30% by weight, based on the weight macromonomer, of polymerized ethylenically unsaturated hydroxy containing monomers and about 70-95% by weight, based on the weight of the macromonomer, of at least one other polymerized ethylenically unsaturated monomer without functional groups.

Preferably, the NAD polymer has a core of polymerized monomers of styrene, an alkyl acrylate or methacrylate and an ethylenically unsaturated monocarboxylic acid and may optionally contain hydroxy alkyl acrylates or methacrylates or acrylonitrile. If the core is crosslinked, allyl acrylate or allyl methacrylate can be used or glycidyl acrylate or methacrylate can be used which will react with the monocarboxylic acid to crosslink the core. The macromonomer arms attached to the core contain polymerized monomers of alkyl methacrylate, alkyl acrylate, each having 1-12 carbon atoms in the alkyl group, glycidyl acrylate or glycidyl methacrylate and ethylenically unsaturated monocarboxylic acid. Typically useful hydroxy containing monomers are hydroxy alkyl acrylates or methacrylates as described above.

Another preferred composition for the NAD polymer that has hydroxy functionality is as follows: a core comprising about 4% by weight methacrylic acid, about 25% by weight hydroxy ethyl acrylate, about 46.5% by weight methyl methacrylate, about 18% by weight methyl acrylate, about 1.5% by weight glycidyl methacrylate and about 5% styrene. The macromonomer attached to the core contains 97.3% by weight prepolymer and about 2.7% by weight glycidyl methacrylate.

The prepolymer contains about 15% by weight styrene, about 28% by weight butyl methacrylate, about 30% by weight butyl acrylate, about 10% by weight hydroxyethyl acrylate, about 2% by weight acrylic acid and about 15% by weight ethyl methacrylate.

The aforementioned acrylosilane polymer, acrylic polyol polymer and NAD polymer are made by conventional solution polymerization processes in which the monomers, solvent and polymerization initiator such as azo and peroxide initiators are reacted at about 90-250 °C for about 1-6 hours.

Conventional solvents and diluents are used to form the above polymers and the resulting coating composition. Solvents are chosen to form polymer solution or dispersions and diluents are chosen to form a coating composition. Typical solvents and diluents are toluene, xylene, butyl acetate, acetone, methyl isobutyl ketone, methyl ethyl ketone, methanol, isopropanol, butanol, hexane, acetone, ethylene glycol, monoethyl ether, VM and P naptha, mineral spirits, heptane and other aliphatic, cycloaliphatic, aromatic hydrocarbons, esters, ethers and ketones and the like.

The crosslinking agent used in the composition is monomeric or polymeric alkylated melamine formaldehyde resin that is partially or fully alkylated. One preferred crosslinking agent is a methylated and

butylated or isobutylated melamine formaldehyde resin that has a degree of polymerization of about 1-3. Generally, this melamine formaldehyde resin contains about 50% butylated groups or isobutylated groups and 50% methylated groups. Typically these crosslinking agents have a number average molecular weight of about 300-600 and a weight average molecular weight of about 500-1500. Typically useful resins are "Cymel" 1168, "Cymel"1161, "Cymel" 1158, "Resimine" 755 and "Resimine" 4514.

Also, urea formaldehyde, benzoquanamine formaldeyde and blocked polyisocyanates may be used as crosslinking agents.

Preferably, about 5-50% by weight, based on the weight of the binder of the composition, of the crosslinking agent is used.

Generally, about 0.1-4% by weight, based on the weight of the composition, of an acid catalyst is used in the coating composition to enhance crosslinking of the components on curing. In particular, the acid catalyzes the reaction of the acrylic polyol and the alkylated melamine formaldehyde crosslinking agent. Typically, blocked aromatic sulfonic acids are used. One preferred blocked acid catalyst is dodecyl benzene sulfonic acid blocked with dimethyl oxazolidine. Other blocking agents can be used such as primary, secondary and tertiary amines. Other acid catalysts that can be used are sulfonic acid, methane sulfonic acid, paratoluene sulfonic acid, dinonyl naphthalene sulfonic acid, phosphoric acid and esters there of the like.

Preferably, about 0.1-5.0% by weight, based on the weight of the composition, of another catalyst is added to catalyze the crosslinking of the acrylosilane polymer with itself and with the acrylic polyol. Typically useful catalysts are dibutyl tin dilaurate, dibutyl tin diacetate, dibutyl tin dioxide, dibutyl tin dioctoate, tin octoate, aluminum titanate, aluminum chelates, zirconium chelate and the like.

To improve weatherability of a clear finish of the coating composition, about 0.1-5% by weight, based on the weight of the binder, of an ultraviolet light stabilizer or a combination of ultraviolet light stabilizers can be added. These stabilizers include ultraviolet light absorbers, screeners, quenchers, and specific hindered amine light stabilizers. Also, about 0.1-5% by weight, based on the weight of the binder, of an antioxidant can be added.

Typical ultraviolet light stabilizers that are useful include benzophenones, triazoles, triazines, benzoates, hindered amines and blends and mixtures thereof. Specific examples of ultraviolet stabilizers are disclosed in U.S. Patent 4,591,533, the entire disclosure of which is incorporated herein by reference.

The composition may also include other conventional formulation additives such as flow control agents such as Resiflow® S (polybutylacrylate), BYK 320 and 325 (high molecular weight polyacrylates), rheology control agents, such as fumed silica, water scavengers such as tetrasilicate, trimethyl orthoformate, triethyl orthoformate and the like.

The composition is primarily used as a clear coat over a pigmented basecoat or color coat to provide a colorcoat/clearcoat finish. Small amounts of pigment can be added to the clear coat to eliminate any color in the finish such as yellowing.

The composition also can be pigmented and used as the color coat, a monocoat or as a primer or primer surfacer. The composition has excellent adhesion to a variety of substrates, such as previously painted substrates, cold rolled steel, phosphatized steel, steel coated with conventional primers such as electrodeposition, primers that typically are crosslinked epoxy polyester and various epoxy resins, alkyd resin repair primers, plastic substrates such as polyester reinforced fiberglass, reaction injection-molded urethanes and partially crystalline polyamides.

The following are typical pigments that can be used: metallic oxides such as titanium dioxide, zinc oxide, iron oxides of various colors, carbon black, filler pigments such as talc, china clay, barytes, carbonates, silicates and a wide variety of organic colored pigments such as quinacridones, copper phthalocyanines, perylenes, azo pigments, indanthrone blues, carbazoles such as carbozole violet, isoindolinones, isoindolones, thioindigo reds, benzimidazolinones, metallic flake pigments such as aluminum flake and the like.

The pigments can be introduced into the coating composition by first forming a mill base or pigment dispersion with any of the aforementioned polymers used in the coating composition or with another compatible polymer or dispersant by conventional techniques, such as high speed mixing, sand grinding, ball milling, attritor grinding or two roll milling. The mill base is then blended with the other constituents used in the coating composition.

The coating composition can be applied by conventional techniques such as spraying, electrostatic spraying, dipping, brushing, flowcoating and the like. The preferred methods are spraying and electrostatic spraying. After application, the composition is baked at 100-150°C for about 15-30 minutes to form a coating about 0.1-3.0 mils thick. When the composition is used as a clearcoat, it is applied over the colorcoat which may be dried to a tack-free state and cured or preferably flash dried for a short period

before the clearcoat is applied. The colorcoat/clearcoat finish is baked as above to provide a dried and cured finish.

The following Examples illustrate the invention. All parts and percentages are on a weight basis unless otherwise indicated.

EXAMPLE 1

Acrylic polyol resin solution is prepared by charging the following constituents into a polymerization reactor equipped with a heat source and a reflux condenser:

| Portion I | Parts by Weight |
|---|---|
| n-Pentyl propionate | 501.00 |
| Portion II | |
| Styrene | 360.00 |
| Isobutyl methacrylate | 696.00 |
| 2-Ethyl hexyl acrylate | 480.00 |
| Hydroxy propyl acrylate | 864.00 |
| n-Pentyl propionate | 285.00 |
| Portion III | |
| t-Butyl peroctoate | 60.00 |
| n-Pentyl propionate | 60.00 |
| | Total 3306.00 |

Portion I is charged into the reactor and is heated to its reflux temperature of about (160-163 °C).

Portions II and III are each premixed and then added simultaneously to the reactor while the reaction mixture is held at its reflux teperature. Portion II is added at a uniform rate over a 6 hour period and Portion III is added at a uniform rate over a 7 hour period. After Portion III is added the reaction mixture is held at its reflux temperature for an additional hour. The resulting acrylic polyol resin solution is cooled at room temperature and filtered.

The resulting acrylic polyol resin solution has a polymer solids of 70% by weight, the polymer has a weight average molecular weight of about 6,000 a hydroxyl number of about 150-160 and contains the following: 15% styrene, 29% isobutyl methacrylate, 20% 2-ethylhexyl methacrylate, 36% hydroxypropyl arylate.

An acrylosilane polymer solution is prepared by charging the following consistuents into a reactor equipped as above:

| Portion I | Parts by Weight |
|---|---|
| "Solvesso" 100 | 75.00 |
| Portions II | |
| Methacryloxypropyl trimethoxysilane | 300.00 |
| Styrene monomer | 173.00 |
| Isobutyl methacrylate monomer | 103.86 |
| "Solvesso" 100 | 45.02 |
| Partion III | |
| 2,2-(2-methyl butane nitrile) | 57.32 |
| "Solvesso" 100 | 85.80 |
| | Total 840.00 |

Portion I is charged into the reactor and heated to its reflux temperature. Portions II and III are each premixed and then added simultaneously to the reactor while the reaction mixture is held out its reflux temperature. Portion II is added at a uniform rate over a 6 hour period and Portion II is added at a uniform

rate over a 7 hour period. After Portion II is added the reaction mixture is held at its reflux temperature for an additional hour. The resulting acrylosilane resin solution is cooled at room temperature and filtered.

The resulting acrylosilane polymer solution has a polymer solids content of about 70%, the polymer has a weight average molecular weight of about 3,000, and has the following constituents: 30% styrene, 18% isobutyl methacrylate, 52% methacryloxypropyl trimethoxysilane.

A hydroxy functional nonaqueous acrylic resin dispersion (NAD) is prepared by charging the following constituents into a reactor equipped as above:

| | Parts by Weight |
|---|---|
| Portion 1 | |
| Isopropanol | 179.26 |
| Acrylic Polymer Solution | 2254.05 |
| (52% solids of an acrylic polymer of 15% styrene, 28% butyl methacrylate, 30% butyl acrylate, 10% hydroxy ethyl acrylate, 2% acrylic acid and 15% ethyl methacrylate having a weight average molecular weight of 10,000 in a solvent mixture of 82.2% xylene and 17.8% butanol) | |
| Mineral spirits | 255.65 |
| Heptane | 1912.46 |
| Portion 2 | |
| Heptane | 28.75 |
| t-Butyl peroctoate | 4.68 |
| Portion 3 | |
| Methyl methacrylate monomer | 1459.69 |
| Hydroxyethyl acrylate monomer | 784.81 |
| Styrene monomer | 156.97 |

| | |
|---|---|
| Portion 4 | |
| Acrylic polymer solution | 1126.52 |
| (53% solids of an acrylic polymer of 15% styrene, 28% butyl methacrylate, 30% butyl acrylate, 10% hydroxy ethyl acrylate, 2% acrylic acid and 15% ethyl methacrylate, 2.7% glycidyl methacrylate having a weight average molecular weight of 10,000 in a solvent mixture of 82.2% xylene and 17.8% butanol) | |
| Methyl methacrylate monomer | 125.57 |
| Methyl acrylate monomer | 565.06 |
| Glycidyl methacrylate monomer | 47.05 |
| Heptane | 17.25 |
| Portion 5 | |
| Mineral Spirits | 638.63 |
| t-Butyl peroctoate | 47.14 |
| Isobutanol | 127.31 |
| Portion 6 | |
| t-Butyl peroctoate | 30.96 |
| Isobutanol | 255.65 |
| Portion 7 | |
| Heptane | 167.25 |
| Total | 10,184.71 |

Portion 1 is charged into the reaction vessel and heated to its reflux temperature. Then Portion 2 is added to the reaction vessel mixed and held at reflux temperature for 2 minutes. Then Portions 3 and 4 are added simultaneously with Portion 5 over a 210 minute period to the reaction vessel while maintaining the resulting reaction mixture at its reflux temperature. Then the mixture is held at its reflux temperature for an additional 45 minutes. Portion 6 is added over a 90 minute period while maintaining the reaction mixture at its reflux temperature and then held at this temperature for an additional 90 minutes. Portion 7 is added and excess solvent is stripped off to give a 60% solids NAD.

The resulting NAD polyster has a core having a weight and average molecular weight of about 100,000-200,000 and arms attached to the core having a weight average molecular weight of about 10,000-15,000.

A coating composition is prepared by blending together the following constituents:

| | Parts by Weight |
|---|---|
| **Portion 1** | |
| Xylene | 163.00 |
| 2(3-hydroxy-3,5' ditert amylphenyl amylphenyl) benzotriazole | 113.20 |
| Hindered amine U.V. light stabilizer solution (40% solution in xylene of 8-acetyl-3-dodecyl - 7, 7, 9, 9-tetramethyl 2, 3, 8-triazaspiro (4,5) decane-2,4 dione) | 147.80 |
| Baysilon Oil Solution (72.8 parts Baysilone Fluid OL and 655.2 parts xylene) | 4.10 |
| **Portion 2** | |
| Methylated/butylated melamine formaldehyde resin (fully butylated and methylated melamine formaldehyde resin having a butoxy/methoxy ratio of 1:1 and a degree of polymerization of about 1-1.2) | 2068.50 |
| Acrylic polyol resin solution (prepared above) | 4054.30 |

| | |
|---|---|
| Blocked sulfonic acid solution (33% solids in methanol of dodecyl benzene sulfonic acid blocked with dimethyl oxazolidine, molar ratio of acid: dimethyl oxazolidine is 1.52:1) | 236.40 |
| NAD Resin Dispersion (prepared above) | 985.40 |
| Acrylosilane polymer solution (prepared above) | 3439.00 |
| Dibutyl tin dilaurate | 65.00 |
| Portion 3 | |
| Methanol | 203.80 |
| "Solvesso" 100 - hydrocarbon solvent | 458.50 |
| Total | 11,939.00 |

The constituents of Portion 1 are added in the order shown to a mixing vessel and agitated until in solution. Portion 2 is added to the vessel and mixed for 30 minutes. Portion 3 is added and mixed for 30 minutes. The resulting clear coating composition has 70% solids content.

The resulting composition is sprayed onto primer coated phosphatized steel panels that were coated with a solvent base pigmented acrylic polymer basecoating composition. The composition is sprayed onto the panels before the basecoating is baked. The panels are baked at 120 °C for 30 minutes and a clear coat about 2 mils thick is formed on each panel. The clear coating has a hardness of 8 knoops, a gloss measured at 20 °C of 95. The coating has excellent outdoor weatherability and resistance to environmental attack, good mar and scratch resistance, good humidity resistance as determined by the Cleveland Humidity test and good chip resistance as determined by a gravelometer test.

EXAMPLE 2

Acrylic polyol resin solution II is prepared by charging the following constituents into a reactor equipped as in Example 1:

| Portion I | Parts by Weight |
|---|---|
| n-Pentyl propionate | 501.00 |
| Portion II | |
| Styrene monomer | 360.00 |
| Trimethylcyclohexyl acrylate monomer | 696.00 |
| 2-Ethylhexyl acrylate monomer | 480.00 |
| Hydroxypropyl acrylate monomer | 864.00 |
| n-Pentyl propionate | 285.00 |
| Portion III | |
| t-Butyl peroctoate | 60.00 |
| n-Pentyl propionate | 60.00 |
| | Total 3,306.00 |

Portion I is charged into the reactor and heated to its reflux temperature. Portion II and III are each premixed and then added simultaneously to the reactor while the reaction mixture is held at its reflux temperature. Portion II is added at a uniform rate over a 6 hour period and Porton III is added at a uniform rate over a 7 hour period. After portion III is added the reaction mixture is held at its reflux temperature for an additional hour. The resulting acrylic polyol resin solution is cooled to room temperature and filtered.

The resulting acrylic polyol resin solution has a polymer solids content of about 70% by weight, the polymer has a weight average molecular weight of about 5,000, a hydroxyl number of about 150 and contains the following: 15% styrene, 29% trimethylcyclohexyl acrylate, 20% 2-ethylhexyl acrylate, 36% hydroxypropyl acrylate.

An acrylosilane polymer solution II is prepared by first forming a silane containg macromonomer and then reacting the macromonomer with acrylic monomers.

The macromonomer is prepared by charging the following constituents into a reactor equipped as above:

| Portion 1 | Parts by Weight |
|---|---|
| Y-9030 (isocyanato propyl methoxy silane) | 750.0 |
| Xylene | 300.0 |
| Portion 2 | |
| Hydroxyethyl acrylate monomer | 340.0 |
| | Total 1390.0 |

Portion 1 is heated to about 120°C and Portion 2 is slowly added over a 1 hour period with constant mixing. The reaction mixture is held at the above temperature of about 1 hour and the isocyanate level is checked by infrared analysis. When the isocyanate level reached zero, the reaction is stopped and the resulting macromonomer solution is cooled to room temperature.

Acrylosilane polymer solution II is prepared by charging the following constituents into a reactor as equipped above:

| Portion I | Parts by Weight |
|---|---|
| "Solvesso" 100 | 430.0 |
| Portion II | |
| Macromonomer solution (prepared above) | 1826.0 |
| Styrene monomer | 765.0 |
| Methyl methacrylate monomer | 153.0 |
| Butyl methacrylate monomer | 153.0 |
| 2-Ethylhexyl methacrylate monomer | 153.0 |
| "Solvesso" 100 | 170.0 |
| Portion III | |
| 2,2-(2 methyl butane nitrile) | 100.0 |
| Solvesso" 100 | 300.0 |
| | Total 4050.0 |

Portion I is charged into the reactor and heated to its reflux temperature. Portions II and II are premixed and slowly added to the reactor while maintaining the reaction mixture at its reflux temperature. Portion II is a added over a 6 hour period Portion III is added over a 7 hour period. The reaction mixture was held at its reflux temperature for an additional hour and then cooled to room temperature.

The resulting acrylosilane polymer solution has a polymer solids content of about 66%, the polymer has a weight average molecular weight of about 6,000, and has the following constituents: 53% macromonomer, 29% styrene, 6% methyl methacrylate, 6% butyl methacrylate, 6% 2-ethylhexyl methacrylate

A coating composition is prepared that is identical to the coating composition of Example 1 except the above prepared acrylic polyol resin solution II is used and the above prepared acrylosilane polymer solution II is used. The resulting clearcoat was evaluated as per Example 1 with similar results with the exception that the coating has a faster cure response and exhibits a better flex/hardness balance.

## Claims

1. A coating composition comprising 20-70% by weight, based on the weight of the composition, of a binder and a liquid organic carrier for the binder; wherein the binder comprises
   a. 10 -90% by weight, based on the weight of the binder, of an acrylosilane polymer having a weight average molecular weight of 500-30,000 wherein the acrylosilane polymer comprises 5-60% by weight, based on the weight of acrylosilane polymer, of polymerized ethylenically unsaturated silane monomers and 40-95% by weight of polymerized non-silane containing ethylenically unsaturated monomers;
   b. 5-40% by weight, based on the weight of the binder, of an acrylic polyol polymer having a hydroxy number of 50-200 and a weight average molecular weight of 1,000-200,000 and comprising polymerized monomers selected from the group consisting of alkyl acrylates, alkyl methacrylates, hydroxy alkyl acrylates, hydroxy methacrylates, and any mixtures thereof; and
   c. 5-50% by weight, based on the weight of the binder, of an alkylated melamine formaldehyde crosslinking agent.

2. The coating composition of claim 1, wherein the acrylosilane polymer comprises ethylenically unsaturated non-silane containing monomers selected from the group consisting of styrene, alkyl acrylate, alkyl methacrylate, where the alkyl groups have 1-12 carbon atoms, cycloaliphatic acrylate, cycloaliphatic methacrylate, aryl acrylate, aryl methacrylate, and any mixtures thereof, and ethylenically unsaturated silane monomers selected from the group consisting of alkoxy silane monomers, acyloxy silane monomers, and any mixtures thereof.

3. The coating composition of claim 1, wherein the acrylic polyol polymer comprises polymerized monomers of alkyl methacrylates, alkyl acrylate, or any mixtures thereof, where the alkyl group has 1-12 carbon atoms, and hydroxy alkyl acrylate or hydroxy alkyl methacrylate, where the alkyl group has 1-4 carbon atoms.

4. The coating composition of claim 1 containing in addition about 5-70% by weight, based on the weight of the binder, of a dispersed polymer comprising about 10-90% by weight, based on the weight of the polymer, of a core of crosslinked polymerized ethylenically unsaturated monomers having a molecular weight of about 50,000-500,000; and attached to the core about 10-90% by weight of macromonomers, comprising,
   i. about 5-30% by weight, based on the weight macromonomer, of polymerized ethylenically unsaturated hydroxy containing monomers,
   ii. about 70-95% by weight, based on the weight of the macromonomer, of at least one other polymerized ethylenically unsaturated monomers without functional groups.

5. The coating composition of claim 1 wherein the composition contains about 0.1-4% by weight, based on the weight of the composition, of an acid catalyst.

6. The coating composition of claim 5 wherein the composition contains about 0.1-5% by weight, based on the weight of the composition, of an organo tin catalyst, an aluminum catalyst or a zirconium catalyst.

7. A process for coating a substrate, comprising the steps of:
   a. applying a layer of a pigmented basecoating to the substrate to form a basecoat thereon;
   b. applying to the basecoat a layer of the compositions of claim 1 to form a top coat over said basecoat;
   c. curing the basecoat and topcoat to form a basecoat and topcoat on the substrate.

8. A substrate coated with a composition of claim 1.

9. A substrate coated with a pigmented basecoat of a film forming polymer and a pigment, and a clearcoat comprising the composition of claim 1 in superimposed adherence to the basecoat.

## Patentansprüche

1. Eine Beschichtungszusammensetzung, die 20-70 Gewichts%, bezogen auf das Gewicht der Zusammensetzung, eines Bindemittels und einen flüssigen organischen Träger für das Bindemittel umfaßt, in der das Bindemittel
   a. 10 - 90 Gewichts%, bezogen auf das Gewicht des Bindemittels, eines Acrylsilanpolymeren mit einer massegemittelten Molekülmasse von 500-30.000, worin das Acrylsilanpolymere 5-60 Gewichts%, bezogen auf das Gewicht des Acrylsilanpolymeren, von polymerisierten ethylenisch ungesättigten Silanmonomeren und 40-95 Gewichts% von polymerisierten, nicht silanhaltigen ethylenisch ungesättigten Monomeren umfaßt;
   b. 5-40 Gewichts%, bezogen auf das Gewicht des Bindemittels, eines Acrylpolyolpolymeren mit einer Hydroxylzahl von 50-200 und einer massegemittelten Molekülmasse von 1.000-200.000, welches polymerisierte Monomere, ausgewählt aus der Gruppe bestehend aus Alkylacrylaten, Alkylmethacrylaten, Hydroxyalkylacrylaten und Hydroxymethacrylaten und beliebige Mischungen hiervon, umfaßt und
   c. 5-50 Gewichts%, bezogen auf das Gewicht des Bindemittels, eines alkylierten Melamin-Formaldehyd-Vernetzungsmittels umfaßt.

2. Die Beschichtungszusammensetzung des Anspruchs 1, worin das Acrylsilanpolymere ethylenisch ungesättigte nicht silanhaltige Monomere, ausgewählt aus der Gruppe bestehend aus Styrol, Alkylacrylat, Alkylmethacrylat, worin die Alkylgruppen 1-12 Kohlenstoffatome aufweisen, cykloaliphatischem Acrylat, cykloaliphatischem Methacrylat, Arylacrylat, Arylmethacrylat und beliebigen Mischungen hiervon, und ethylenisch ungesättigte Silanmonomere, ausgewählt aus der Gruppe bestehend aus Alkoxysilanmonomeren, Acyloxysilanmonomeren und beliebigen Mischungen hiervon, umfaßt.

3. Die Beschichtungszusammensetzung des Anspruchs 1, worin das Acrylpolyolpolymere polymerisierte Monomere von Alkylmethacrylaten, Alkylacrylat oder beliebige Mischungen hiervon, worin die Alkylgruppe 1-12 Kohlenstoffatome aufweist, und Hydroxyalkylacrylat und Hydroxyalkylmethacrylat, worin die Alkylgruppe 1-4 Kohlenstoffatome aufweist, umfaßt.

4. Die Beschichtungszusammensetzung des Anspruchs 1, welche zusätzlich etwa 5-70 Gewichts%, bezogen auf das Gewicht des Bindemittels, eines dispergierten Polymeren, das etwa 10-90 Gewichts%, bezogen auf das Gewicht des Polymeren, einer Kernzone von vernetzten polymerisierten ethylenisch ungesättigten Monomeren mit einem Molekulargewicht von etwa 50.000-500.000 umfaßt; und angeheftet an die Kernzone etwa 10-90 Gewichts% von Makromonomeren, die
   i. etwa 5-30 Gewichts%, bezogen auf das Gewicht des Makromonomeren, von polymerisierten ethylenisch ungesättigten hydroxylhaltigen Monomeren, und
   ii. etwa 70-95 Gewichts%, bezogen auf das Gewicht des Makromonomeren, von zumindest einem anderen polymerisierten ethylenisch ungesättigten Monomeren ohne funktionelle Gruppen umfassen, enthält.

5. Die Beschichtungszusammensetzung des Anspruchs 1, worin die Zusammensetzung etwa 0,1-4 Gewichts%, bezogen auf das Gewicht der Zusammensetzung, eines sauren Katalysators enthält.

6. Die Beschichtungszusammensetzung des Anspruchs 5, worin die Zusammensetzung 0,1-5 Gewichts%, bezogen auf das Gewicht der Zusammensetzung, eines Organozinnkatalysators, eines Aluminiumkatalysators oder eines Zirconiumkatalysators enthält.

7. Ein Verfahren zum Beschichten eines Substrats, welches die Stufen
   a. Auftragen einer Schicht einer pigmentierten Grundbeschichtung auf das Substrat, um darauf eine Grundschicht zu bilden;
   b. Auftragen einer Schicht der Zusammensetzungen des Anspruchs 1 auf die Grundschicht, um über der genannten Grundschicht eine Deckschicht zu bilden;
   c. Vernetzung der Grundschicht und der Deckschicht, um eine Grundschicht und eine Deckschicht auf dem Substrat zu bilden, umfaßt.

8. Ein Substrat, das mit einer Zusammensetzung des Anspruchs 1 beschichtet ist.

**9.** Ein Substrat, das mit einer pigmentierten Grundschicht, bestehend aus einem filmbildenden Polymeren und einem Pigment, und mit einer Transparentschicht, welche die Zusammensetzung des Anspruchs 1 umfaßt und mit der die Grundschicht fest haftend überschichtet ist, beschichtet ist.

## Revendications

**1.** Une composition de revêtement comprenant 20 à 70 % en poids, par rapport au poids de la composition, d'un liant et d'un véhicule organique liquide pour le liant, dans laquelle le liant comprend :

a. 10 à 90 % en poids, par rapport au poids du liant, d'un polymère d'acrylosilane présentant un poids moléculaire moyen en poids de 500 à 30 000, le polymère d'acrylosilane comprenant 5 à 60 % en poids, par rapport au poids de polymère d'acrylosilane, de monomères silanes à insaturation éthylénique polymérisés et 40 à 95 % en poids de monomères à insaturation éthylénique polymérisés autres que des silanes ;

b. 5 à 40 % en poids, par rapport au poids du liant, d'un polymère de polyol acrylique ayant un nombre d'hydroxyles de 50 à 200 et un poids moléculaire moyen en poids de 1000 à 200 000 et comprenant des monomères polymérisés choisis dans le groupe formé par les acrylates d'alkyle, les métha crylates d'alkyle, les acrylates d'hydroxyalkyle, les méthacrylates hydroxylés et les mélanges de ces monomères ; et

c. 5 à 50 % en poids, par rapport au poids du liant, d'un agent de réticulation formée de mélamine alcoylée-formaldéhyde.

**2.** La composition de revêtement de la revendication 1, dans laquelle le polymère d'acrylosilane comprend des monomères à insaturation éthylénique autres que des silanes qui sont choisis dans l'ensemble formé par le styrène, les acrylates d'alkyle, les méthacrylates d'alkyle, où les groupes alkyles comptent 1 à 12 atomes de carbone, les acrylates cycloaliphatiques, les méthacrylates cycloaliphatiques, les acrylates d'aryle, les méthacrylates d'aryle, et tous mélanges de ces monomères, et des monomères silanes à insaturation éthylénique choisis dans l'ensemble formé par les alcoxysilanes monomères, les acyloxysilanes monomères et les mélanges de ces composés.

**3.** La composition de revêtement de la revendication 1, dans laquelle le polymère de polyol acrylique comprend des monomères polymérisés de méthacrylates d'alkyle, d'acrylates d'alkyle ou de tous mélanges de ces composés, où le groupe alkyle compte 1 à 12 atomes de carbone, et d'acrylates d'hydroxyalkyle ou de méthacrylates d'hydroxyalkyle, où le groupe alkyle compte 1 à 4 atomes de carbone.

**4.** La composition de revêtement de la revendication 1 contenant en outre environ 5 à 70 % en poids, par rapport au poids du liant, d'un polymère dispersé comprenant environ 10 à 90 % en poids, par rapport au poids du polymère, d'un coeur de monomères à insaturation éthylénique polymérisés réticulés ayant un poids moléculaire d'environ 50 000 à 500 000, et, fixés au coeur, environ 10 à 90 % de macromonomères, comprenant :

i. environ 5 à 30 % en poids, par rapport au poids de macromonomère, de monomères à insaturation éthylénique hydroxylés polymérisés,

ii. environ 70 à 95 % en poids, par rapport au poids du macromonomère, d'au moins un autre monomère à insaturation éthylénique sans groupes fonctionnels polymérisé.

**5.** La composition de revêtement de la revendication 1 où la composition renferme environ 0,1 à 4 % en poids, par rapport au poids de la composition, d'un catalyseur acide.

**6.** La composition de revêtement de la revendication 5 où la composition renferme environ 0,1 à 5 % en poids, par rapport au poids de la composition, d'un catalyseur organostannié, d'un catalyseur à l'aluminium ou d'un catalyseur au zirconium.

**7.** Un procédé pour revêtir un support, comprenant les opérations consistant :

a. à appliquer une couche d'un apprêt pigmenté au support pour former sur celui-ci un revêtement d'apprêt ;

b. à appliquer au revêtement d'apprêt une couche des compositions de la revendication 1 pour former un revêtement de finition par-dessus ladite couche d'apprêt;

c. à durcir le revêtement d'apprêt et le revêtement de finition pour former un revêtement d'apprêt et de finition sur le support.

**8.** Un support revêtu d'une composition selon la revendication 1.

**9.** Un support revêtu d'un apprêt pigmenté d'un polymère filmogène et d'un pigment, et d'un revêtement incolore comprenant la composition de la revendication 1 en adhérence de superposition au revêtement d'apprêt.

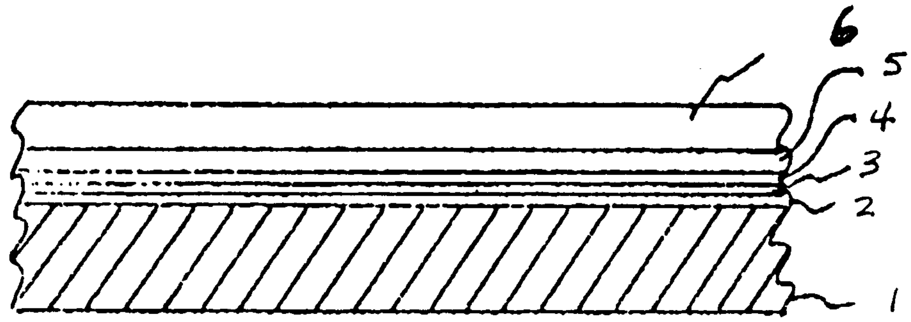


FIG